Europäisches Patentamt

(19) European Patent Office

Office européen des brevets

(11) EP 0 778 326 A2

(12) **EUROPEAN PATENT APPLICATION**

(43) Date of publication:
11.06.1997 Bulletin 1997/24

(51) Int. Cl.$^6$: **C09D 201/06**, B05D 7/16, B32B 15/08

(21) Application number: 96119552.6

(22) Date of filing: 05.12.1996

(84) Designated Contracting States:
DE ES FR GB SE

(30) Priority: 06.12.1995 JP 344777/95

(71) Applicant: Nippon Paint Co., Ltd.
Kita-ku, Osaka-shi, Osaka 531 (JP)

(72) Inventors:
• Fukuden, Koichi
Kadoma-chi, Osaka-fu (JP)
• Yuasa, Kouichi
Otokuni-gun, Kyoto-fu (JP)

• Kenny, John
Osaka-shi, Osaka-fu (JP)
• Morihara, Miwa
Suita-shi, Osaka-fu (JP)
• Sawada, Haruhiko
Osaka-shi, Osaka-fu (JP)

(74) Representative: Kinzebach, Werner, Dr. et al
Patent Attorneys,
Reitstötter, Kinzebach & Partner,
Sternwartstrasse 4
81679 München (DE)

(54) **Coating compositions for precoated metal sheets**

(57) A coating composition suitable for use in precoated metal sheets comprising:

(A) a hydroxyl group-containing film-forming resin having a hydroxyl number of from 5 to 100;
(B) 0.5 to 10 parts by weight as solids of a first curing agent per 100 parts by weight as solids of said film-forming resin (A), said first curing agent having a solubility parameter lower than the solubility parameter of said film-forming resin (A) by at least 0.5;
(C) 10 to 50 parts by weight as solids of a second curing agent per 100 parts by weight as solids of said film-forming resin (A), said second curing agent having a solubility parameter not lower than by 0.5 or higher than the solubility parameter of said film-forming resin (A);
(D) 0.1 to 2.0 parts by weight of an acid catalyst per 100 parts by weight as solids of said film-forming resin (A) for promoting the reaction between said film-forming resin (A) and said first curing agent (B); and
(E) an amount in excess for neutralizing said acid catalyst (D) of a volatile amine having a boiling point not lower than 40 °C but lower than the baking temperature of the composition.

**Description**

BACKGROUND OF THE INVENTION

This invention relates to a coating composition suitable for use in the manufacture of precoated metal sheets.

Precoated metal sheets are widely used in household electrical appliances, building materials and the like. Coating compositions for precoated metal sheets are required to give a film having high hardness and machinability/formability performance. For outdoor uses such as for roofings and sidings, the film is additionally required to exhibit high weatherability and anti-staining performance. For instance, precoated metal sheets (PCM) are subject to staining with dust-containing rain droplets when exposed in the outdoor environment. PCMs used in building roofs, noise-damping road fences or tunnel linings are subject to staining with acid rain or acid exhaust gas. None of prior art compositions satisfy with all of the above requirements. For example, a thermosetting coating composition for PCM is disclosed in Kanai et al., Materials and Process, vol. 6, 1494-1497 (1993). It is claimed therein that high anti-staining and machinability/formability properties are achievable in thermosetting polyester-based compositions only when the composition comprises a polyester resin having a hydroxyl number of 8-40 and a fully alkylated melamine resin at a weight ratio of 7:3 as solids, and an amount of amine-blocked sulfonic acid catalyst. The mechanism for forming a cured film having high anti-staining and machinability/formability performance is explained to be the creation of concentration gradation of melamine resin across the film thickness. Namely, the closer to the film surface, the higher in the melamine resin concentration. This contributes to imparting the film surface with high anti-staining performance while retaining flexibility in the remaining portions which contributes to high machinability/formability of the entire film. However, the anti-staining performance studied in this report is addressed to oily marker inks but not to rain and/or exhaust gas. According to our tests, the film did not exhibit satisfactory anti-staining performance against rain droplets which are totally different in nature from oily marker inks. Moreover, this coating composition tends to create winkles in cured films due to premature curing of melamine resin-rich surface portion compared to the remaining portions.

For use as top coats for finishing automobile bodies, various coating compositions having improved anti-acid rain, anti-scratch and weatherability performance are disclosed, for instance, in JP-A-03172368, JP-A-05320562, JP-A-06041496, JP-A-04036365 and JP-A-07207223. These compositions, however, do not satisfy with all of the above-discussed properties and anti-staining performance required for PCMs for outdoor use in particular. JP-A-06166846 discloses a coating composition for automobile body finishing or PCM coating containing a lactone-modified acrylic resin. This composition also fails to satisfy with anti-staining performance against rain droplets although machinability/formability is improved.

It is, therefore, a principal object of the present invention to provide a coating composition for use in precoated metal sheets which is excellent not only in hardness and machinability/formability but also in performance required for outdoor use such as weatherability and anti-staining properties against rain droplets and/or exhaust gas.

SUMMARY OF THE INVENTION

According to the present invention, there is provided a coating composition suitable for use in precoated metal sheets comprising:

(A) a hydroxyl group-containing film-forming resin having a hydroxyl number of from 5 to 100;
(B) 0.5 to 10 parts by weight as solids of a first curing agent per 100 parts by weight as solids of said film-forming resin (A), said first curing agent having a solubility parameter lower than the solubility parameter of said film-forming resin (A) by at least 0.5;
(C) 10 to 50 parts by weight as solids of a second curing agent per 100 parts by weight as solids of said film-forming resin (A), said second curing agent having a solubility parameter not lower than by 0.5 or higher than the solubility parameter of said film-forming resin (A);
(D) 0.1 to 2.0 parts by weight of an acid catalyst per 100 parts by weight as solids of said film-forming resin (A) for promoting the reaction between said film-forming resin (A) and said first curing agent (B); and
(E) an amount in excess for neutralizing said acid catalyst (D) of a volatile amine having a boiling point not lower than 40 °C but lower than the baking temperature of the composition.

Although the invention is not intended to be bound to any particular theory, it is postulated that the composition of the present invention meets all of the above-discussed requirements for use in PCMs, particularly those for use in the outdoor environment according to the following principle. Because the first curing agent (B) is less compatible with the film-forming resin (A) than the second curing agent (C), it tends to migrate toward to the surfaces of coating film during the baking step. At the same time, amines (E) having relatively low boiling point used for neutralizing the acid catalyst (D) assist the enrichment of acid catalyst (D) in the surface portion by the evaporation from the coating film during the baking step. As a result, the crosslinking density of the coating film becomes higher in the portion near the surface than in the remaining portions making that portion harder and less susceptible to staining. On the other hand, the second curing agent (C) remains in the body of coating film because of relatively high compatibility with the film-forming resin to secure an appropriate crosslinking density in the body portions beneath the surface portion for keeping high machinability/formability of the entire film and for preventing the formation of wrinkles on the surface.

DETAILED DISCUSSION

(A) Film-Forming Resin:

Film-forming resins crosslinkable with an external crosslinker such as melamine resins or blocked polyisocyanates are well-known in the coating industry. Typical examples thereof are hydroxyl group-containing acrylic resins and polyester resins.

As is well-known in the art, hydroxyl group-containing acrylic resins may be produced by copolymerizing a hydroxyl group-containing acrylic monomer with other ethylenically unsaturated monomers by the conventional methods. Examples of hydroxyl group-containing monomers include 2-hydroxyethyl (meth)acrylate, 2-hydroxypropyl (meth) acrylate, 4-hydroxybutyl (meth)acrylate and other hydroxyalkyl (meth)acrylates. In order to give flexibility to cured films for enhancing machinability/formability, soft segment-containing monomers such as 2-hydroxyethyl (meth)acrylate/$\varepsilon$-caprolactone adducts sold under the trademark PCL-FA and PCL-FM series by Daicel Chemical Industries, Ltd., or polyalkylene glycol mono(meth)acrylate may also be used in combination with hydroxyalkyl (meth) acrylate monomers. Examples of monomers copolymerizable with the hydroxyl group-containing acrylic monomer include methyl (meth)acrylate, ethyl (meth)acrylate, propyl (meth) acrylate, n-butyl (meth)acrylate, i-butyl (meth)acrylate, t-butyl (meth)acrylate, 2-ethylhexyl (meth)acrylate, lauryl (meth)acrylate, other alkyl (meth)acrylate, styrene, vinyltoluene, acrylonitrile, vinyl acetate, glycidyl (meth) acrylate, acrylic acid, methacrylic acid and the like.

As is well-known in the art, polyester resins are a polycondensate of a polycarboxylic acid component and a polyhydric alcohol component. Examples of polycarboxylic acids include aromatic dicarboxylic acids and acid anhydrides such as terephthalic acid, isophthalic acid, phthalic acid and its anhydride, 2,6-naphthalenedicarboxylic acid, or 2,7-naphthalenedicarboxylic acid; and aliphatic dicarboxylic acids such as succinic acid, adipic acid, azelaic acid, sebacic acid, dodecanedicarboxylic acid, or 1,4-cyclohexanedicarboxylic acid. A small proportion of lactones such as $\gamma$-butyrolactone or $\varepsilon$-caprolactone; their corresponding hydroxycarboxylic acids; aromatic hydroxymonocarboxylic acids such as p-hydroxyethoxybenzoic acid or p-hydroxybenzoic acid; and tri- or tetracarboxylic acids such as trimellitic acid or pyromellitic acid may be incorporated into the acid component.

Examples of the alcohol component include ethylene glycol, 1,3-propanediol, 1,4-butanediol, 1,5-pentanediol, 1,6-hexanediol, diethylene glycol, triethylene glycol, 1,4-cyclohexanediol, bisphenol A-ethylene oxide adducts and bisphenol S-ethylene oxide adducts. Branched chain-aliphatic glycols such as 1,2-propanediol, neopentyl glycol, 1,2-butanediol, 1,3-butanediol, 2,3-butanediol, 1,2-pentanediol, 2,3-pentanediol, 1,4-pentanediol, 1,4-hexanediol, 2,5-hexanediol, 3-methyl-1,5-pentanediol, 1,2-dodecanediol or 1,2-octanediol may also be used. The alcohol component may also include a small proportion of a tri- or tetrahydric alcohol such as trimethylolpropane, glycerine or pentaerythritol.

The film-forming resin (A) should have a hydroxyl number within a range between 5 and 100, preferably between 10 and 60. Within this range, it is possible to establish a good balance between the curability and machinability/formability of the coating film. Of course, the film-forming resin (A) should meet other parameter requirements for resins to be used in PCM coatings. For example, it is preferable for the film-forming resin to have an acid number of 0 to 50, a Tg of -20°C to 60°C , and a number average molecular weight of 1,800 to 20,000. Since the selection of the first and second curing agents is made depending upon the solubility parameter of the film-forming resin (A), the resin (A) preferably has an SP of 9.5 to 12, more preferably 10.4 to 12, and most preferably 11 to 12. When two or more resins are used in combination, the SP value as used herein refers to the weight average of solubility parameters of all resins.

The solubility parameter may be determined by the following method. See, Sue, Clarke, J. Polymer Sci. A-1, 5, 1671-1681 (1967).

Temperature= 20°C

Sample: 0.5g of the resin is weighed in a 100 ml beaker and dissolved in 10 ml of a good solvent pipetted into the beaker with stirring by a magnetic stirrer.

Solvent:

Good solvent: dioxane, acetone  
Poor solvent: n-hexane, deionised water

Turbid point titration:

An amount of poor solvent is added dropwise from a 50 ml buret to the sample solution. The turbid point is a point at which the solution turns turbid.

Calculation:

The SP($\delta$) is given by the following equations:

$$\delta = (Vml^{1/2}\delta ml + Vmh\delta mh/(Vml^{1/2} + Vmh^{1/2})$$

$$Vm = V_1 V_2/(\phi_1 V_2 + \phi_2 V_1)$$

$$\delta m = \phi_1 \delta_1 + \phi_2 \delta_2$$

wherein:

$Vi$= molecular volulme (ml/mole)
$\phi_1$ = volumetric fraction of each solvent at the turbid point
$\delta i$= SP of individual solvent
ml= low SP solvent mixture system
mh= high SP solvent mixture system

(B) First Curing Agent:

The first curing agent (B) is required to have an SP level which is lower than that of the film-forming resin (A) by at least 0.5, and may be selected from aminoplast resins, preferably from melamine resins. The first curing agent (B) should not crosslink by itself before migrating to the surface portion. When taking this and the SP requirement into consideration, melamine resins etherified with i-butyl or n-butyl, or both methyl and i-butyl or n-butyl are preferable. Commercial products meeting these requirements are available. Non-limiting examples thereof are listed below.

| Alkoxy, mole % | SP | Name |
|---|---|---|
| methoxy:i-butoxy=60:40 | 10.5 | CYMEL 238 (Mitsui Cytech) |
| methoxy:butoxy=60:40 | 10.5 | CYMEL 235 (Mitsui Cytech) |
| methoxy:butoxy=65:35 | 10.4 | CYMEL 232 (Mitsui Cytech) |
| methoxy:butoxy=40:60 | 10.1 | CYMEL 236 (Mitsui Cytech) |
| methoxy:butoxy=70:30 | 10.6 | CYMEL 266 (Mitsui Cytech) |
| methoxy:butoxy=70:30 | 10.6 | CYMEL 267 (Mitsui Cytech) |
| butoxy=100 | 9.5 | MYCOAT 506 (Mitsui Cytech) |
| butoxy=100 | 10.0 | YUBAN 20SE (Mitsui Toatsu) |
| butoxy=100 | 10.5 | YUBAN 20N-60 (Mitsui Toatsu) |

Other aminoplast resins such as benzoguanamine resins may also be used provided they meet the above-mentioned requirements.

Second Curing Agents (C):

The second curing agent (C) is required to have an SP level which is not lower by 0.5 or higher than that of the film-forming resin (A). In other words, the SP level of the second curing agent (C) may be equal to or higher than that of the film-forming resin and should not be lower than that of the resin (A) by 0.5. This means that the second curing agent (C) is more compatible with the resin (A) than the first curing agent (B). Because of this, the second curing agent (C) remains in the body of coating films during the baking step to accomplish uniform crosslinking density throughout the entire film.

Non-limiting examples of the second curing agents are etherified melamine resins and blocked polyisocyanates. Melamine resins having an SP level within the above range are commercial available including, for example, SUMIMAL M40S (Sumitomo Chemical) having an SP of 12.9. Blocked polyisocyanates generally have an SP level higher than 11.5. Therefore, these products may be combined with the film-forming resin (A) having an SP level of 9.5 to 12 as the second curing agent.

Non-limiting examples of polyisocyanates include alphatic diisocyanates such as hexamethylenediisocyanate (HMDI), or trimethylhexamethylenediisocyanate; alicyclic diisocyanates such as isophoronediioscyanate (IPDI); araliphatic diisocyantes such as xylylenediisocyanate; aromatic diisocyanates such as tolylenediisocyanate (TDI) or 4,4'-diphenylmethanediisocyanate (MDI); dimers and trimers of these diisocyanates; and adducts of these diisocyanates with trimethylolpropane or water.

Examples of blocking agents include oximes such as methyl ethyl ketoxime, acetoxime, cyclohexanone oxime, acetophenone oxime or benzophenone oxime; phenols such as m-cresol or xylenol; alcohols such as methanol, ethanol, butanol, 2-ethylhexanol, cyclohexanol or ethylene glycol monoethyl ether; lactams such as ε-caprolactam; diketones such as diethyl malonate or acetoacetate esters; and mercaptans such as thiophenol. Methyl ethyl ketoxime (MEK oxime) and diketones are preferred because the unblocking temperature of polyisocyanates blocked with these blocking agent generally lies below 150°C and, therefore, the use of these blocking agents may promote the curing and anti-staining performance of cured films.

It is particularly preferred for the second curing agent (C) to have a reaction-initiation temperature which is lower than that of the first curing agent (B). The reaction-initiation temperature may be determined by the DSA (dynamic spring analysis) method. According to this method, relative dynamic modulus of elasticity Er is plotted against temperature at a temperature raising rate of 3°C /minute to obtain a curve. The reaction-initiation temperature is a point at which the curve bends suddenly. By virtue of lower reaction-initiation temperature the second curing agent (C) begins to crosslink the film-forming resin (A) in the body of coating films prior to the reaction of the first curing agent (B) in the surface portion to prevent formation of wrinkles on the surface of films. Examples of the second curing agents (C) meeting this desirable requirement include SUMIMAL M40S sold by Sumitomo Chemical as etherified melamine resins, and DESMODUR TPLS 2062 sold by Sumitomo Bayer Urethane and ethyl acetoacetate-blocked HMDI cyanurate as blocked polyisocyanates.

(D) Acid Catalyst:

Any known acid catalyst conventionally used in the curing reaction of polyester resins or hydroxyl group-containing acrylic resins with melamine resins may be used. Specific examples thereof include aromatic sulfonic acids such as dodecylbenzenesulfonic acid, dinonylnaphthalenesulfonic acid, or p-toluenesulfonic acid; and organic phosphonic acids such as aminotri(methylenephosphonic acid), 1-hydroxyethylidene-1,1-diphosphonic acid, ethylenediaminetetra(methylenephosphonic acid), or diethylenetriaminepenta(methylenephosphonic acid).

(E) Amine Compound:

Because the acid catalyst (D) catalyses the curing reaction even at room temperature, the acid catalyst (D) is generally used in the form of its ammonium or amine salt capable of dissociation at the baking temperature if one component composition is intended. As described before, the present invention utilizes the difference in SP between the first and second curing agents for localizing the first curing agent (B) in the surface portion. In addition to this, the present invention utilizes evaporation of amines (E) used for neutralizing or blocking the acid catalyst (D) for concentrating the acid catalyst (D) in the vicinity of surface of coating films during the baking step. To accomplish this purpose, the amine compound (E) should have a boiling point not lower than 40 °C but lower than the baking temperature, specifically from 40°C to 230 °C, preferably from 50°C to 150 °C. Specific examples of amine compounds (E) include propylamine (b.p. 48 °C), diethylamine (b.p. 56°C), diisopropylamine (b.p. 84°C), triethylamine (b.p. 90 °C), 2-dimethylaminoethanol (b.p. 135 °C), cyclohexylamine (b.p. 135°C), 2-diethylaminoethanol (b.p. 162°C), butylamine (b.p. 77°C), aniline (b.p. 185°C) and N,N-dimethylaniline (b.p. 193 °C).

Formulation:

One of characteristic features of the present invention resides in the proportions of Components (A), (B) and (C). Calcurated based on 100 parts by weight as solids of component (A), component (B) is incorporated from 0.1 to 10 parts, preferably from 2 to 7 parts by weight as solid. Similarly, component (C) is incorporated from 10 to 50 parts, preferably from 20 to 40 parts by weight as solids. In other words, component (C) is main curing agent while component (B) is auxiliary curing agent. If this relationship is reversed, it is no longer possible to obtain desired coating films having excellent anti-staining, hardness and machinability/formability properties in combination.

The amount of acid catalyst (D) may be from 0.1 to 2.0 parts by weight, preferably from 0.5 to 1.5 parts by weight per 100 parts by weight of component (A) as solids.

Another characteristic features of the present invention is the use of an amount of amine compound (E) in excess over the stoichiometric amount for neutralizing the acid catalyst (D) to enrich the acid catalyst (D) in the surface portion. Normally, an excess of from 5 to 20 times, preferably 10 to 15 times of the stoichiometric amount may be added.

Coating Composition and Application:

The coating composition of the present invention may generally be used as a solution in an organic solvent which may be selected depending upon solubility and evaporation rate. Examples thereof include toluene, xylene, Solvesso 100, Solvesso 150, ethyl acetate, butyl acetate, methyl ethyl ketone, methyl isobutyl ketone, cyclohexanone, isophorone, butanol, octatanol, diacetone alcohol, carbitol acetate, methoxybutyl acetate or a mixture thereof.

The coating composition of the present invention may also contain, depending upon particular use and application, a coloring pigment such as titanium dioxide, carbon black, iron oxide, cyanine green or cyanine blue; an extender pigment such as calcium carbonate, clay or barium sulfate; a matting agent such as silica or alumina; and other conventional additives such as defoaming agents, leveling agents, antisagging agents, UV absorbents, surface conditioners, dispersants, viscosity regulators or waxes. When a blocked polyisocyanate is employed as component (C), a tin compound such as dibutyltin dilaurate or dibutyltin oxide is added.

The coating composition may be prepared using conventional mills or dispersers such as roll mills, paint shakers, pot mills, dispers or bead mills. Pigments are dispersed in a solution of dispersant resin to prepare a pigment paste. To this are added other ingredients followed by milling the mixture in the above machine.

The substrate may be galvanized steel sheets, alloyed galvanized steel sheets, zinc-aluminum plated steel sheets, aluminum plated steel sheets, aluminum sheets, stainless steel sheets or cold rolled steel sheets. Although the coating composition may be directly applied on the substrate, it is preferable for those applications requiring high corrosion resistance that the substrate be coated with a primer coating such as epoxy primers, polyurethane-modified epoxy primers or polyester primers, and then with the coating composition of the present invention using the two coats/two bake method. Any conventional coating method or apparatus may be used including roller coating, airless spray coating or electrostatic coating. Usually roller coating is employed. The baking temperature and time generally lies between 190°C and 230°C (substrate temperature) for a length of time between 30 and 70 seconds.

Precoated metal sheets thus produced find use, among others, as construction materials to be used in the outdoor environment in which the material is exposed to severe pollutants such as rain droplets, acid rain or exhaust gas. These include building roofs and walls, noise-damping materials used for highway roads and tunnel linings.

The invention is further illustrated by the following examples wherein all parts and percents are by weight unless otherwise specified.

Production Examples 1-3

A reaction vessel equipped with a stirrer, reflux condenser and heating means was charged with 49 parts of xylene and 10 parts of cyclohexanone and heated to 115°C . To this were added dropwise 100 parts of a monomer mixture shown in Table 1 below and 4.5 parts of t-butylperoxyl-2-ethylhexanoate over 3 hours. After the addition, the mixture was kept at 115°C for 30 minutes. Then 0.5 parts of t-butylperoxy-2-ethylhexanoate were added and the mixture kept at 115°C with stirring for 2 hours.

Table 1

| Monomer, parts | Production Example | | |
|---|---|---|---|
| | 1 | 2 | 3 |
| Methyl methacrylate | 36.7 | 48.4 | 58.7 |
| Ethyl methacrylate | 31.4 | — | — |
| n-Butyl acrylate | — | 40.2 | — |
| 2-Ethylhexyl acrylate | — | — | 34.9 |
| 2-Hydroxyethyl acrylate | — | 1.8 | — |
| PCL FM-1 [1] | — | 9.7 | — |
| PCL FM-2 [2] | 31.9 | — | 6.4 |
| Polymer | | | |
| Acrylic resin | A | B | C |
| Nonvolatiles,% | 64 | 64 | 64 |
| SP | 11.5 | 11.0 | 10.5 |
| OH number, mg KOH/g | 50 | 30 | 10 |
| Mn | 5000 | 5000 | 5000 |

1) 2-hydroxyethyl methacrylate/caprolactone adduct (1:1)
sold by Daicel Chemical Industries, Ltd.
2) 2-hydroxyethyl methacrylate/caprolactone adduct (1:2)
sold by Daicel Chemical Industries, Ltd.

Production Example 4

A reaction vessel equipped with a heater, stirrer, reflux condenser, water separator, distillation column and thermometer was charged with 20 parts of neopentyl glycol, 15 parts of 1,6-hexanediol, 6.5 parts of trimethylolpropane and 26 parts of ε-caprolactone. The mixture was then heated at 100 °C until the mixture became molten and agitatable. Thereafter 0.02 parts of dibutyltin oxide and 57 parts of isophthalic acid were added to the reaction vessel followed by heating the mixture to 230°C. During this period, the temperature was raised at a constant rate over 3 hours from 180 °C to 230 °C while removing water produced by the condensation reaction. After maintaining the temperature at 230 °C for 1 hour, the reaction was allowed to proceed with the addition of 5 parts of xylene until an acid number of 7.0 was reached. After cooling to 100 °C, the reaction mixture was diluted with 45 parts of Solvesso 150 and 23 parts of xylene. A polyester resin hereinafter referred to as "Polyester A" having a nonvolatile content of 60 %, an SP level of 10.7, a hydroxyl number of 50, and a number average molecular weight of 4,000 was obtained.

Production Example 5

The same reaction vessel as used in Production Example 4 was charged with 36.2 parts of dimethyl phthalate, 20.1 parts of neopentyl glycol and 22.8 parts of 1,6-hexanediol. When the mixture became molten and agitatable by the application of heat, the reaction was allowed to proceed in the presence of 0.02 parts of dibutyltin oxide by raising the temperature to 210 °C at a constant rate over 4 hours. During this period, methanol produced by the transesterification reaction was removed from the reaction system. After cooling to 100°C, 31.0 parts of isophthalic acid and 8.5 parts of ε-caprolactone (PLACCEL M sold by Daicel Chemical Industries, Ltd.) were added to the reaction vessel followed by heating the mixture to 250 °C. During this period, the temperature was raised at a constant rate over 4 hours from 180 °C to 250 °C while removing water produced by the condensation reaction. After maintaining the temperature at 250 °C for 1 hour, the reaction was allowed to proceed with the addition of 5 parts of xylene until an acid number of 1.0 was reached. After cooling to 100 °C, the reaction mixture was diluted with 50 parts of Solvesso 150 and 50 parts of cyclohexanone. A polyester resin hereinafter referred to as "Polyester B" having a nonvolatile content of 55 %, an SP level of 10.4, a hydroxyl number of 15, and a number average molecular weight of 5,000 was obtained.

Examples 1-9

Coating Composition

130 parts of titanium oxide and 50 parts as solids of Resin (A) were milled in a sand grind mill for 1.5 hours at 30 °C until a particle size measured by a particle size guage of less than 5 μm was reached. Then the remaining 50 parts of Resin (A), and other components (B), (C), (D) and (E) in quantities shown in Table 2 were dispersed with the above pigment paste in a disper. Finally, 3 parts of defoaming agent, 3 parts of wax and 0.2 parts of dibutyltin dilaurate (only when a polyisocyanate curing agent was used) were added with stirring.

Coated Test Sheet

Substrate:

Zinc phosphate-treated galvanized steel sheet having a thickness of 0.4 mm.

Primer:

A polyester-based primer (FLEKICOAT P600 primer sold by Nippon Paint Co., Ltd.) was applied to a dry film thickness of 5 μm using a bar coater and baked at 220 °C (substrate temperature) for 1 minute.

Over Coating:

Each of the above coating composition was applied on the primer coating to a dry film thickness of 20 μm and baked at 220°C (substrate temperature) for 1 minute.

Evaluation

Each test sheet was evaluated for appearance, curability, hardness, machinability/formability and anti-staining according to the following methods.

Apearance:

Visual examination of wrinkles and flatness of the film.
◎: Excellent; ○: Good; X: Poor

Hardness:

Pencil hardness according to JIS S-6006.

Curability:

The coated surface was rubbed with a piece of gauze fabric impregnated with xylene at 100 reciprocations at a load of 1 kg.
○: No change; △: Partly dissolved; X: Exposure of substrate

Machinability/Formability:

The test sheet was bent in U-shape through 180 °C over a number of interposed steel sheets having a thickness of 0.4 μm which were stacked together and the occurence of cracks in the bent area was visually observed. Machinability/formability is expressed in terms of the minimum number of stacked sheets at which no crack is observed. The symbol "2T", for example, stands for two sheets. The smaller the number the better.

Anti-staining:

Oily marker ink: A line was drawn on the coated sheet with an oily marker ink (red) and dried at room temperature for 24 hours. Then the line was wiped off with a cotton pad impregnated with ethanol.
○: No trace; △: Slight trace; X: Remarkable trace
Carbon black: About 2 ml of 10 % aqueous dispersion of carbon black was placed on the coated surface, dried at 80°C for 24 hours, and wiped off with a cotton pad impregnated with water. Then the color difference ΔE between non-stained area and the wiped area was determined using a color difference meter.

Dust: The coated surface was stained for 15 minutes according to "Accelerated Method A" described in Yoshizawa et al., Proceedings of Annual meeting of Japan Architectural Finnish Society 1995, pages 203-206, and washed with water. The color difference ΔE before and after staining was measured.

Natural rain: The test sheet was exposed to natural rain for 3 months and washed with water. The color difference before and after the exposure was measured.

The results obtained are shown in Table 3 below.

Table 2

|  |  | EXAMPLE |  |  |  |
| --- | --- | --- | --- | --- | --- |
| Material | 1 | 2 | 3 | 4 | 5 |
| **Component (A):** |  |  |  |  |  |
| Name | Acrylic A | Acrylic B | Acrylic C | Acrylic A | Acrylic B |
| SP | 11.5 | 11.0 | 11.5 | 11.5 | 11.0 |
| OH# | 50 | 30 | 10 | 50 | 30 |
| Parts as solids | 100 | 100 | 100 | 100 | 100 |
| **Component (B):** |  |  |  |  |  |
| Name | CYMEL 238 | CYMEL 236 | MYCOAT 506 | CYMEL 232 | CYMEL 235 |
| SP | 10.5 | 10.1 | 9.5 | 10.4 | 10.5 |
| Reaction Initiation Temp. | 131℃ | 137℃ | 140℃ | 145℃ | 140℃ |
| Parts as solids | 5 | 3 | 5 | 5 | 3 |
| **Component (C):** |  |  |  |  |  |
| Name | DESMODUR BL 3175 | ditto | ditto | SUMIMAL M40S | Blocked HMDI |
| SP | 12.1 |  |  | 12.9 | 12 |
| Reaction Initiation Temp. | 150℃ |  |  | 135℃ | 115℃ |
| Parts as solids | 30 | 30 | 30 | 20 | 30 |
| **Component (D):** |  |  |  |  |  |
| Name | CATALYST 6000 | CATALYST 600 | CATALYST 500 | ditto | CATALYST 4050 |
| Parts | 0.4 | 0.4 | 0.4 | 0.4 | 0.2 |
| **Component (E):** |  |  |  |  |  |
| Name | Triethylamine | ditto | ditto | ditto | Diethylamine |
| b.p. | 90 ℃ |  |  |  | 56 ℃ |
| Times in excess | 10 | 10 | 10 | 6 | 15 |

Table 2 (Cont'd)

| Material | Example | | | |
| --- | --- | --- | --- | --- |
| | 6 | 7 | 8 | 9 |
| Component (A): Name | Acrylic B | Polyester A | Acrylic A | Polyester B |
| SP | 11.0 | 10.7 | 11.5 | 10.4 |
| OH# | 30 | 50 | 50 | 15 |
| Parts as solids | 100 | 100 | 100 | 100 |
| Component (B): Name | YUBAN 20SE | ditto | CYMEL 236 | MYCOAT 506 |
| SP | 10.0 | | 10.1 | 9.5 |
| Reaction Initiation Temp. | 140℃ | | 137℃ | 140℃ |
| Parts as solids | 7 | 5 | 5 | 5 |
| Component (C): Name | SANPLEX BL 1200 | DESMODUR BL 3175 | DESMODUR TPLS 2062 | DESMODUR BL 3175 |
| SP | 11.7 | 12.1 | 11.8 | 12.1 |
| Reaction Initiation Temp. | 140℃ | 150℃ | 120 ℃ | 150℃ |
| Parts as solids | 30 | 30 | 30 | 30 |
| Component (D): Name | CATALYST 4050 | CATALYST 6000 | ditto | ditto |
| Parts | 0.2 | 0.4 | 0.4 | 0.4 |
| Component (E): Name | Dimethylethanolamine | Triethylamine | ditto | Diisopropylamine |
| b.p. | 135 ℃ | 90 ℃ | | 84 ℃ |
| Times in excess | 10 | 10 | 10 | 10 |

EP 0 778 326 A2

Table 3

| Item | EXAMPLES | | | | | | | | |
|---|---|---|---|---|---|---|---|---|---|
| | 1 | 2 | 3 | 4 | 5 | 6 | 7 | 8 | 9 |
| Appearance | ○ | ○ | ○ | ◎ | ◎ | ○ | ○ | ◎ | ○ |
| Curability | ○ | ○ | ○ | ○ | ○ | ○ | ○ | ○ | ○ |
| Pencil hardness | H | H | H | 2H | H | H | H | H | H |
| Machinability/formability | 6T | 6T | 6T | 7T | 6T | 7T | 5T | 6T | 5T |
| Antistaining: | | | | | | | | | |
| Marker ink, red | ○ | ○ | ○ | ○ | ○ | ○ | ○ | ○ | ○ |
| Carbon black, ΔE | <0.5 | <0.5 | <0.5 | <0.5 | <0.5 | <0.5 | <0.5 | <0.5 | <0.5 |
| Dust, ΔE | <0.5 | <0.5 | <0.5 | <0.5 | <0.5 | <0.5 | <0.5 | <0.5 | <0.5 |
| Natural rain, ΔE | <1 | <1 | <1 | <1 | <1 | <1 | <1 | <1 | <1 |

Remarks:

Component (B)

CYMEL 238: Alkyl-etherified melamine resin (methoxy: i-butoxy= 60:40) sold by Mitsui Cytech Co., Ltd.
CYMEL 236: Alkyl-etherified melamine resin (methoxy: i-butoxy= 40:60) sold by Mitsui Cytech Co., Ltd.
MYCOAT 506: Alkyl-etherified melamine resin (butoxy=100) sold by Mitsui Cytech Co., Ltd.
CYMEL 232: Alkyl-etherified melamine resin (methoxy: butoxy= 60:35) sold by Mitsui Cytech Co., Ltd.
CYMEL 235: Alkyl-etherified melamine resin (methoxy: butoxy= 60:40) sold by Mitsui Cytech Co., Ltd.
YUBAN 20SE: Butyl-etherified melamine resin sold by Mitsui Toatsu Chemicals, Inc.
CYMEL 303: Methyl-etherified melamine resin sold by Mitsui Cytech Co., Ltd.

Component (C)

DESMODUR BL3175: MEBK oxime-blocked HMDI Cyanurate sold by Sumitomo Bayer Urethane Co., Ltd.
SUMIMAL M40S: Alkyl-etherified melamine resin sold by Sumitomo Chemical Co., Ltd.
Blocked HMDI: Ethyl acetoacetate-blocked HMDI cyanurate.
DESMODUR TPLS 2062: Diethyl malonate-blocked HMDI cyanurate sold by Sumitomo Bayer Urethane Co., Ltd.

Component (D)

CATALYST 6000: Dodecylbenzenesulfonic acid based catalyst sold by Mitsui Toatsu Chemicals, Inc.
CATALYST 600: Same as above sold by Mitsui Cytech Co., Ltd.
CATALYST 500: Dinonylnaphthalenesulfonic acid based catalyst sold by Mitsui Cythech Co., Ltd.
CATALYST 4050: Triethylamine neutralized p-toluenesulfonic acid based catalyst sold by Mitsui Cytech Co., Ltd.

Comparative Examples 1-5

Analogous to Examples 1-9, coating compositions for comparison were prepared by mixing components (A) to (E), pigment, defoaming agent and wax according to the formulations shown in Table 4, applied on the substrate, and tested for various properties. The results obtained are shown in Table 5.

Table 4

| Material | COMPARATIVE EXAMPLE | | | | | |
|---|---|---|---|---|---|---|
| | 1 | 2 | 3 | 4 | 5 | 6 |
| Component (A): Name | Acrylic X | Acrylic Y | Acrylic A | | | Acrylic B |
| SP | 11.7 | 10.2 | 11.5 | ditto | ditto | 11.0 |
| OH# | 110 | 2 | 50 | | | 30 |
| Parts as solids | 100 | 100 | 100 | 100 | 100 | 100 |
| Component (B): Name | CYMEL 238 | CYMEL 236 | CYMEL 238 | CYMEL 232 | CYMEL 303 | CYMEL 238 |
| SP | 10.5 | 10.1 | 10.5 | 10.4 | 13.6 | 10.5 |
| Reaction Initiation Temp. | 131°C | 137°C | 131°C | 145°C | 134°C | 131°C |
| Parts as solids | 5 | 3 | 5 | 5 | 5 | 5 |
| Component (C): Name | DESMODUR BL 3175 | ditto | ditto | CYMEL 235 | DESMODUR BL 3175 | ditto |
| SP | 12.1 | | | 10.5 | 12.1 | |
| Reaction Initiation Temp. | 150°C | | | 140°C | 150°C | |
| Parts as solids | 30 | 30 | 30 | 20 | 30 | 30 |
| Component (D): Name | CATALYST 6000 | CATALYST 600 | CATALYST 500 | ditto | CATALYST 4050 | CATALYST 6000 |
| Parts | 0.4 | 0.4 | 0.4 | 0.4 | 0.2 | 0.4 |
| Component (E): Name | Triethylamine | ditto | Trimethylamine | Triethylamine | ditto | ditto |
| b.p. | 90 °C | | 3°C | 90 °C | | |
| Times in excess | 10 | 10 | 10 | 10 | 10 | 0.5 |

EP 0 778 326 A2

13

Table 5

| Item | COMPARATIVE EXAMPLE | | | | | |
|---|---|---|---|---|---|---|
| | 1 | 2 | 3 | 4 | 5 | 6 |
| Appearance | ◯ | ◯ | ◯ | X | ◯ | ◯ |
| Curability | ◯ | △ | ◯ | ◯ | ◯ | ◯ |
| Pencil hardness | H | HB | H | 2H | H | H |
| Machinability/formability | 10T | 10T | 6T | 8T | 8T | 6T |
| Antistaining: | | | | | | |
| Marker ink, red | △ | X | △ | X | X | △ |
| Carbon black, $\Delta E$ | <0.5 | 50 | 1-2 | 10 | 20 | 0.5-1 |
| Dust, $\Delta E$ | <0.5 | 10 | 1-2 | 2-5 | 10 | 0.5-1 |
| Natural rain, $\Delta E$ | <1 | 10 | 1-2 | 2-5 | 10 | 1-2 |

**Claims**

1. A coating composition suitable for use in precoated metal sheets comprising:

(A) a hydroxyl group-containing film-forming resin having a hydroxyl number of from 5 to 100;
(B) 0.5 to 10 parts by weight as solids of a first curing agent per 100 parts by weight as solids of said film-forming resin (A), said first curing agent having a solubility parameter lower than the solubility parameter of said film-forming resin (A) by at least 0.5;
(C) 10 to 50 parts by weight as solids of a second curing agent per 100 parts by weight as solids of said film-forming resin (A), said second curing agent having a solubility parameter not lower than by 0.5 or higher than the solubility parameter of said film-forming resin (A);
(D) 0.1 to 2.0 parts by weight of an acid catalyst per 100 parts by weight as solids of said film-forming resin (A) for promoting the reaction between said film-forming resin (A) and said first curing agent (B); and
(E) an amount in excess for neutralizing said acid catalyst (D) of a volatile amine having a boiling point not lower than 40 °C but lower than the baking temperature of the composition.

2. The coating composition according to claim 1, wherein the film-forming resin (A) has a hydroxyl number from 10 to 60.

3. The coating composition according to claim 1 or 2, wherein the film-forming resin (A) is a hydroxyl group-containing acrylic resin or a polyester resin.

4. The coating composition according to claim 1 or 2 or 3, wherein the film-forming resin (A) has a solubility parameter of from 9.5 to 12.

5. The coating composition according to claim 1, wherein the first curing agent (B) is an alkyl-etherified aminoplast resin.

6. The coating composition according to claim 5, wherein said alkyl-etherified aminoplast resin is a melamine resin etherified with n-butyl or i-butyl group, or a melamine resin etherified both with the methyl group and with n-butyl or i-butyl group.

7. The coating composition according to claim 1, wherein the second curing agent (C) is a blocked polyisocyanate or an etherified melamine resin.

8. The coating composition according to claim 1 or 7, wherein the second curing (C) has a reaction initiation temperature lower than that of the first curing agent (B).

9.  The coating composition according to claim 1, wherein the acid catalyst (D) is an aromatic sulfonic acid or an organic phosphonic acid.

10. The coating composition according to claim 1, wherein the amount of the amine compound (E) is as from 5 to 20 times much as the stoichiometric amount for neutralizing the acid catalyst (D).

11. A precoated metal sheet having thereon a cured coating film of the composition of any of preceding claims.